# EUROPEAN PATENT SPECIFICATION

(11) **EP 3 156 476 B1**
(45) Date of publication and mention of the grant of the patent: **18.12.2019**
(21) Application number: 16181877.8
(22) Date of filing: 29.07.2016
(51) Int. Cl.: A23C 19/076, A23C 19/09, C12J 1/08

(54) **FOOD PRODUCT**
LEBENSMITTELPRODUKT
PRODUIT ALIMENTAIRE

(30) Priority: 06.08.2015 IT UB20153175
(43) Date of publication of application: 19.04.2017
(73) Proprietor: Acetificio Carandini Emilio S.p.A., 41051 Castelnuovo Rangone (MO) (IT)
(72) Inventor: CARANDINI, Giovanni, I-41051 CASTELNUOVO RANGONE (MO) (IT)
(74) Representative: Corradini, Corrado

(56) References cited:
- Kevin Watral: "Balsamic Cream Sauce", Allrecipes.com , 16 February 2008 (2008-02-16), page 6PP, XP002754091, Retrieved from the Internet: URL:http://allrecipes.com/recipe/160121/ba lsamic-cream-sauce/ [retrieved on 2016-02-05]
- PatMe: "Balsamic Vinegar and Red Wine Reduction", Food.com , 9 April 2013 (2013-04-09), page 4PP, XP002754092, Retrieved from the Internet: URL:http://www.food.com/recipe/balsamic-vi negar-and-red-wine-reduction-459578 [retrieved on 2016-02-05]
- Ms. B: "Roasted Red Pepper Dip", Geniuskitchen.com , 2006, pages 1-7, Retrieved from the Internet: URL:http://www.geniuskitchen.com/recipe/ro asted-red-pepper-dip-72947 [retrieved on 2018-01-05]

## Description

### TECHNICAL FIELD OF THE INVENTION

The present invention regards a method for producing a food product based on vinegar cream and cheese cream.

In particular, the present invention regards a method for obtaining a food product based on vinegar cream and cheese cream that allows to obtain a food product with a particularly unique and pleasant flavour, as well as with long preservation period, suitable to maintain the edibility, nutritional value and organoleptic characteristics thereof unaltered.

### STATE OF THE PRIOR ART

In the food industry, there is an ever-growing offer of food products proposed by producers to consumers seeking for new and unique flavours.

In particular, over the last years there has been an increasing use of products like creams, condiments, and the like, based on food products such as cheese (and other food products) to be used combined with other dishes and recipes to confer a particular flavour, or even alone.

Kevin Watral in his recipe named "Balsamic Cream Sauce" (http://allrecepies.com/recipe/160121/balsamic-cream-sauce/) teaches how to prepare a sauce comprising olive oil, butter, onion, balsamic vinegar, chicken bouillon granules, heavy cream, and Parmesan cheese. According to the directions, the balsamic cream sauce is obtained through the steps of: heating olive oil and butter, stirring the onion and cooking until it has a caramelized to a dark, golden brown, stirring in the balsamic vinegar and cooking for one minute, stirring in the chicken bouillon and the heavy cream, bringing to a simmer, then removing from the heat and stirring in the Parmesan cheese until melted.

PatMe in his/her recipe named "Balsamic Vinegar and Red Wine Reduction" (http://www.food.com/recipe/balsamic-vinegar-and-red-wine-reduction-459578) teaches how to prepare a sauce comprising balsamic vinegar, red wine and sugar. According to the directions, the sauce is obtained combining all the ingredients in a wide pan and boiling until reduced by at least half. Sugar can be increased or decreased to taste.

However, most food products of this type reveal some drawbacks, due to the fact that they have rather limited preservation period due to the characteristics of the ingredients used.

### OBJECTS OF THE INVENTION

Thus, the technical task of the present invention is to provide a method for obtaining a food product based on vinegar cream and cheese cream that allows to obtain a food product with particularly unique and pleasant flavour, so as to be appealing to the consumer, and that has a long preservation period, suitable to maintain the edibility, nutritional value and organoleptic characteristics thereof unaltered.

Within this technical task, obtaining a food product based on vinegar cream and cheese cream that can be obtained in a simple and economic manner represents a particular object of the present invention.

This task and this object are attained by the method for producing a food product based on vinegar cream and cheese cream according to the enclosed claim 1.

The method for producing a food product based on vinegar cream and cheese cream, comprises the steps of providing at least one vinegar cream and at least one cheese cream, mixing at least one vinegar cream with at least one cheese cream in respective predetermined amounts, so as to obtain a food product having the characteristics of stability with long periods of preservation as well as particularly unique and pleasant flavour.

In addition, the same object is attained by a food product comprising at least one vinegar cream and at least one cheese cream mixed together, so as to obtain a final food product having the characteristics of stability with long preservation period as well as with particularly unique and pleasant flavour.

Further features and advantages are described in the dependent claims.

### EMBODIMENTS OF THE INVENTION.

The method for producing a food product based on vinegar cream and cheese cream, comprises the steps of providing at least one vinegar cream and at least one cheese cream, mixing at least one vinegar cream with at least one cheese cream in respective predetermined amounts, so as to obtain a food product having the characteristics of stability with long periods of preservation as well as with a particularly unique and pleasant flavour.

In particular, in a first embodiment of the method, the aforementioned vinegar cream could be obtained through the steps of mixing grape must and/or grape juice with vinegar, balsamic vinegar and caramel, adding a first thickener, so as to obtain suitable thickness and viscosity of said vinegar cream. The balsamic vinegar used is preferably the Balsamic Vinegar of Modena PGI. The Balsamic Vinegar of Modena PGI is made up of wine vinegar, grape must and at least 10-year aged vinegar, kept in barrels for at least two months; caramel may be optionally added before or after the storage in barrels. The Balsamic Vinegar of Modena PGI is approved by the pertinent Organisation designated to control.

In a second embodiment of the method, the vinegar cream can be obtained through the steps of mixing grape must and/or grape juice with vinegar and with a condiment either based on vinegar and grape must or based on vinegar and grape juice, adding a first thickener, so as to obtain suitable thickness and viscosity of said vinegar cream.

The vinegar may be white wine vinegar and/or red wine vinegar and/or even de-coloured wine vinegar and/or apple cider vinegar and/or derivatives of vinegar. The grape must and/or grape juice may be of the white and/or red type, fresh, cooked, concentrated, rectified, and the like.

In said second embodiment of the method, the vinegar cream is preferably obtained through the steps of mixing white grape must and/or white grape juice with white vinegar and with a white condiment either based on white vinegar and white grape must or based on white vinegar and white grape juice, adding a first thickener, so as to obtain suitable thickness and viscosity of said vinegar cream.

The expression cream is used to indicate a preparation with a creamy density, even thick or dense.

The aforementioned thickener is preferably modified starch. This does not exclude the use of any other thickener suitable for the purpose.

In particular, the thickener is added using a powder shaker machine.

The aforementioned cheese cream is obtained by mixing - at a predetermined temperature - at least cheese, water, milk, emulsifying salt and/or at least one derivative of milk, for example but not exclusively, milk whey, butter, milk cream, yoghurt. The addition of such emulsifying salt during heating, for example at 90°C for a pre-set period of at least 20 minutes, allows to form a bond between the liquid ingredients even in the presence of a fat substance (such as milk, cheese, butter, milk cream, yoghurt) and to obtain a compact, viscous and homogeneous product.

In particular, the cheese cream comprises an amount of cheese at a percentage comprised between 10% and 70% of the total. Preferably, the amount of cheese is equivalent to 25% of the cream cheese.

Preferably, the cheese used to obtain the cream cheese is Parmigiano Reggiano, in particular Parmigiano Reggiano PDO. Other embodiments providing for the use of other types of cheese are not excluded.

More in detail, the cheese cream may be obtained by mixing Parmigiano Reggiano PDO, at a percentage equivalent to 25% of the total, water, milk whey, butter, milk protein, emulsifying salt, acidity corrector and a second thickener. Preferably, the emulsifying salt is sodium citrate, the acidity corrector is citric acid, and the second thickener is carrageenan.

The milk used for obtaining the cheese cream is preferably whole milk.

More in detail, the method comprises the steps of mixing said vinegar cream with the cheese cream at pre-set amounts respectively comprised between 55% and 85% of the total for vinegar cream and comprised between 5% and 35% of the total for cheese cream.

In particular, with reference to the first embodiment of the method of the present invention, which comprises the use of balsamic vinegar, preferably Balsamic Vinegar of Modena PGI, the method could comprise the steps of providing grape must, preferably concentrated grape must, or grape juice, preferably concentrated grape juice, at a percentage comprised between 20% and 70%, wine vinegar at a percentage comprised between 3% and 25%, balsamic vinegar at a percentage comprised between 3% and 25%, caramel at a percentage comprised between 1% and 9%, a first thickener at a percentage comprised between 0.1% and 9%, and cheese cream at a percentage comprised between 5% and 50%.

Even more in particular, with reference to the first embodiment of the method of the present invention, which comprises the use of balsamic vinegar, preferably Balsamic Vinegar of Modena PGI, the method could comprise the steps of providing grape must, preferably concentrated, or grape juice, preferably concentrated, at a percentage comprised between 35% and 55%, wine vinegar at a percentage comprised between 10% and 15%, balsamic vinegar at a percentage comprised between 10% and 20%, caramel at a percentage comprised between 2% and 4%, a first thickener at a percentage comprised between 2% and 4%, cheese cream at a percentage comprised between 25% and 35%.

With reference to the second embodiment of the method of the present invention, which comprises the use of a condiment of the white type, the method could comprise the steps of providing concentrated white grape must or concentrated white grape juice at a percentage comprised between 20% and 70%, white wine vinegar at a percentage comprised between 5% and 40%, condiment either based on white vinegar and concentrated white grape must or based on white vinegar and concentrated white grape juice at a percentage comprised between 5% and 40%, a first thickener at a percentage comprised between 0.1% and 9%, cheese cream at a percentage comprised between 5% and 40%.

Preferably, with reference to the second embodiment of the method of the present invention, the method could comprise the steps of providing concentrated white grape must or concentrated white grape juice at a percentage comprised between 35% and 55%, white wine vinegar at a percentage comprised between 15% and 25%, condiment either based on white vinegar and concentrated white grape must or based on white vinegar and concentrated white grape juice at a percentage comprised between 10% and 20%, a first thickener at a percentage comprised between 2% and 4%, cheese cream at a percentage comprised between 15% and 25%.

The step of mixing the vinegar cream and the cheese cream is carried out using a dough making machine/mixer.

Preferably, the mixing occurs under cold conditions using a cutter provided with large blades so as to mix and blend the ingredients that have a high viscosity and thickness, which would otherwise remain separated. The mixing of the vinegar cream, of the acid type, and the cheese cream, of the fat type, is carried out by a dough making machine/mixer, without adding additives or catalysts, as well as even without heating due to the fact that it could alter the organoleptic characteristics of the product.

In particular, the first thickener added to the vinegar cream, the emulsifying salt and the second thickener added to the cheese cream promote the appropriate final mixing of the two creams, obtained - as mentioned - without any additional ingredient but simply by exploiting the mechanical action of the dough making machine/mixer.

All the ingredients used may be of organic origin and/or conventional. Also disclosed herein is a food product comprising at least one vinegar cream and at least one cheese cream mixed, so as to obtain a final food product having the characteristics of stability with long preservation period as well as with particularly unique and pleasant flavour.

According to one embodiment, the food product comprises at least one vinegar cream as previously described and at least one cheese cream as previously described, mixed together.

Further disclosed herein is a food product obtained through the method herein described.

The food product, obtained by mixing together the two vinegar and cheese creams, acquires the inherent stability characteristics typical of products containing wine vinegar and grape must; thus, the obtained food product is easy to handle and similar to food products of viticulture origin.

In particular, the mixing of the vinegar cream with the cheese cream allows to increase the basic acidity of the final food product and to obtain a suitable viscosity thereof, thus to counter-balance the absence of acidity and the high doughiness of the cheese cream alone.

Thus, the described method allows to obtain a food product having suitable basic acidity values and an ideal thickness and homogeneity (with low levels of free water), thus guaranteeing long preservation periods at room temperature, at least six months and up to two or three years, according to the microbiological analysis carried out.

The invention thus conceived allows to obtain important technical advantages. An important technical advantage lies in the fact that the method for obtaining the food product based on vinegar cream and cheese cream, as described above, allows to obtain a finished product with long preservation periods, due to the microbiological and final acidity characteristics attained, due to the optimal mixing of the vinegars - of the types and in the proportions described above - with the other ingredients. Thus, the organoleptic characteristics, the edibility and the nutritional value of the food product remain unaltered over a longer period of time with respect to products of the known type.

In addition, the described method allows attaining a food product with particularly unique and pleasant flavour, and it may be taken combined with dishes, in recipes or even alone, thus appealing to the consumer. Furthermore, the method for producing a food product based on vinegar cream and cheese cream as described above can be implemented in a simple and economic way.

Though the present invention has been described according to preferred embodiments, technically equivalent embodiments may be conceived without departing from the scope of protection offered by the claims that follow.

## Claims

1. A method for producing a food product based on vinegar cream and cheese cream, comprising the steps of providing at least one vinegar cream and at least one cheese cream; mixing at least said at least one vinegar cream with said at least one cheese cream in respective predetermined amounts, so as to obtain a food product having the characteristics of stability with long periods of preservation, wherein said cheese cream is obtained by mixing, at a predetermined temperature, at least cheese, water, milk and/or at least one milk derivative, emulsifying salt, wherein said vinegar cream is obtained through the steps of mixing grape must and/or grape juice with vinegar and with a condiment either based on vinegar and grape must or based on vinegar and grape juice, adding a first thickener, so as to obtain suitable thickness and viscosity of said vinegar cream, **characterised in that** the vinegar cream and the cheese cream are mixed at pre-set amounts respectively comprised between 55% and 85% of the total for vinegar cream and comprised between 5% and 35% of the total for cheese cream.

2. Method according to claim 1, wherein said vinegar cream is obtained through the steps of mixing grape must and/or grape juice with vinegar, balsamic vinegar and caramel; adding at least one first thickener, so as to obtain suitable thickness and viscosity of said vinegar cream.

3. Method according to any one of the preceding claims, wherein said vinegar is white wine vinegar and/or red wine vinegar and/or de-coloured wine vinegar and/or apple cider vinegar, and wherein said grape must and/or said grape juice are of the white and/or red type, fresh, cooked, concentrated, rectified.

4. Method according to any one of the preceding claims, wherein said first thickener is modified starch.

5. Method according to claim 1, wherein the step of mixing at least cheese, water, milk and/or at least one milk derivative, emulsifying salt occurs simultaneously with heating, in particular at 90°C for a pre-set period of at least 20 minutes.

6. Method according to claim 5, wherein said cheese cream comprises an amount of cheese at a percentage comprised between 30% and 70% of the total.

7. Method according to claim 1 or 5 or 6, wherein said cheese is Parmigiano Reggiano.

8. Method according to claim 1 or 5 to 7, wherein the milk is whole milk.

9. Method according to any one of the preceding claims, comprising the steps of providing concentrated grape must or concentrated grape juice at a percentage comprised between 20% and 70%, wine vinegar at a percentage comprised between 3% and 25%, balsamic vinegar at a percentage comprised between 3% and 25%, caramel at a percentage comprised between 1% and 9%, first thickener at a percentage comprised between 0.1% and 9%, cheese cream at a percentage comprised between 5% and 50%.

10. Method according to any one of the preceding claims 1 to 8, comprising the steps of providing concentrated white grape must or concentrated white grape juice at a percentage comprised between 20% and 70%, white wine vinegar at a percentage comprised between 5% and 40%, condiment either based on white vinegar and concentrated white grape must or based on white vinegar and concentrated white grape juice, said condiment being at a percentage comprised between 5% and 40%, first thickener at a percentage comprised between 0.1% and 9%, cheese cream at a percentage comprised between 5% and 40%.

11. Method according to anyone of the preceding claims, wherein said step of mixing said vinegar cream with said cheese cream is carried out using a dough making machine or a mixer.

12. Method according to claim 11, wherein said dough making machine or mixer is a cutter.

13. Method according to any one of the preceding claims 4 to 12, wherein said step of adding thickener is carried out through a powder shaker machine.

## Patentansprüche

1. Verfahren zum Herstellen eines Nahrungsmittels auf der Basis von Essigcreme und Käsecreme, umfassend die Schritte eines Bereitstellens von mindestens einer Essigcreme und mindestens einer Käsecreme; Mischen von mindestens der mindestens einen Essigcreme mit der mindestens einen Käsecreme in jeweils vorbestimmten Mengen, um ein Nahrungsmittelprodukt zu erlangen, das die Eigenschaften der Stabilität bei langer Haltbarkeitsdauer aufweist, wobei die Käsecreme durch Mischen von mindestens Käse, Wasser, Milch und/oder mindestens einem Milchderivat bei einer vorbestimmten Temperatur erlangt wird, wobei die Essigcreme durch die Schritte eines Mischens von Traubenmost und/oder Traubensaft mit Essig und mit einem Gewürz entweder basierend auf Essig und Traubenmost oder basierend auf Essig und Traubensaft erlangt wird, Hinzufügen eines ersten Verdickungsmittels, um eine geeignete Dicke und Viskosität der Essigcreme zu erlangen, **dadurch gekennzeichnet, dass** die Essigcreme und die Käsecreme in voreingestellten Mengen gemischt werden, die jeweils zwischen 55 % und 85 % der Gesamtmenge für Essigcreme und zwischen 5 % und 35 % der Gesamtmenge für Käsecreme sind.

2. Verfahren nach Anspruch 1, wobei die Essigcreme erlangt wird durch die Schritte eines Mischens von Traubenmost und/oder Traubensaft mit Essig, Balsamico-Essig und Karamell; Hinzufügen von mindestens einem ersten Verdickungsmittel, um eine geeignete Dicke und Viskosität der Essigcreme zu erlangen.

3. Verfahren nach einem der vorherigen Ansprüche, wobei der Essig Weißweinessig und/oder Rotweinessig und/oder entfärbter Weinessig und/oder Apfelessig ist, und wobei der Traubenmost und/oder der Traubensaft vom weißen und/oder roten Typ, frisch, gekocht, konzentriert, bereinigt ist.

4. Verfahren nach einem der vorherigen Ansprüche, wobei das erste Verdickungsmittel modifizierte Stärke ist.

5. Verfahren nach Anspruch 1, wobei der Schritt eines Mischens von mindestens Käse, Wasser, Milch und/oder mindestens einem Milchderivat, Emulgatorsalz gleichzeitig mit dem Erwärmen, insbesondere bei 90 °C, über einen voreingestellten Zeitraum von mindestens 20 Minuten erfolgt.

6. Verfahren nach Anspruch 5, wobei die Käsecreme eine Menge an Käse in einem Prozentsatz von zwischen 30 % und 70 % der Gesamtmenge umfasst.

7. Verfahren nach Anspruch 1 oder 5 oder 6, wobei der Käse Parmigiano Reggiano ist.

8. Verfahren nach Anspruch 1 oder 5 bis 7, wobei die Milch Vollmilch ist.

9. Verfahren nach einem der vorstehenden Ansprüche, umfassend die Schritte eines Bereitstellens von konzentriertem Traubenmost oder konzentriertem Traubensaft mit einem Prozentsatz zwischen 20 % und 70 %, Weinessig mit einem Prozentsatz zwischen 3 % und 25 %, Balsamico-Essig mit einem Prozentsatz zwischen 3 % und 25 %, Karamell mit einem Prozentsatz zwischen 1 % und 9 %, erstes Verdickungsmittel mit einem Prozentsatz zwischen 0,1 % und 9 %, Käsecreme mit einem Prozentsatz zwischen 5 % und 50 %.

10. Verfahren nach einem der vorherigen Ansprüche 1 bis 8, umfassend die Schritte eines Bereitstellens von konzentriertem weißem Traubenmost oder konzentriertem weißem Traubensaft mit einem Prozentsatz zwischen 20 % und 70 %, Weißweinessig mit einem Prozentsatz zwischen 5 % und 40 %, Gewürze entweder basierend auf weißem Essig und konzentriertem weißem Traubenmost oder basierend auf weißem Essig und konzentriertem weißem Traubensaft, wobei das Gewürz mit einem Prozentsatz zwischen 5 % und 40 %, das erste Verdickungsmittel mit einem Prozentsatz zwischen 0,1 % und 9 %, Käsecreme mit einem Prozentsatz zwischen 5 % und 40 % ist.

11. Verfahren nach einem der vorherigen Ansprüche, wobei der Schritt eines Mischens der Essigcreme mit der Käsecreme unter Verwendung einer Teigherstellungsmaschine oder eines Mischers durchgeführt wird.

12. Verfahren nach Anspruch 11, wobei die Teigherstellungsmaschine oder der Mischer ein Schneidwerkzeug ist.

13. Verfahren nach einem der vorherigen Ansprüche 4 bis 12, wobei der Schritt eines Hinzufügens von Verdickungsmittel durch eine Pulverrüttlermaschine durchgeführt wird.

## Revendications

1. Méthode pour la production d'un produit alimentaire à base de crème de vinaigre et de crème de fromage, comprenant les étapes suivantes : fourniture d'au moins une crème de vinaigre et d'au moins une crème de fromage, mélange d'au moins ladite crème de vinaigre avec au moins ladite crème de fromage dans des quantités prédéterminées respectives, de façon à obtenir un produit alimentaire ayant les caractéristiques de stabilité avec de longues périodes de conservation, dans laquelle ladite crème de fromage est obtenue en mélangeant, à une température prédéterminée, au moins du fromage, de l'eau, du lait et/ou au moins un dérivé du lait, du sel émulsionnant, dans laquelle ladite crème de vinaigre est obtenue via les étapes suivantes : mélange de moût raisin et/ou de jus de raisin avec du vinaigre et avec un condiment à base de vinaigre et de moût de raisin ou à base de vinaigre et de jus de raisin, ajout d'un premier épaississant, afin d'obtenir une densité et une viscosité adaptées de ladite crème de vinaigre, **caractérisée en ce que** la crème de vinaigre et la crème de fromage sont mélangées dans des quantités prédéfinies respectivement comprises entre 55 % et 85 % du total de la crème de vinaigre et comprises entre 5 % et 35 % du total de la crème de fromage.

2. Méthode selon la revendication 1, dans laquelle ladite crème de vinaigre est obtenue via les étapes suivantes : mélange de moût de raisin et/ou de jus de raisin avec du vinaigre, du vinaigre balsamique et du caramel, ajout d'au moins un premier épaississant, afin d'obtenir une densité et une viscosité adaptées de ladite crème de vinaigre.

3. Méthode selon l'une quelconque des revendications précédentes, dans laquelle ledit vinaigre est du vinaigre blanc et/ou du vinaigre de vin et/ou du vinaigre de vin décoloré et/ou du vinaigre de cidre de pomme et dans laquelle ledit moût de raisin et/ou ledit jus de raisin sont de type blanc et/ou rouge, frais, cuit(s), concentré(s) et rectifié(s).

4. Méthode selon l'une quelconque des revendications précédentes, dans laquelle ledit premier épaississant est de l'amidon modifié.

5. Méthode selon la revendication 1, dans laquelle l'étape de mélange d'au moins du fromage, de l'eau, du lait et/ou d'au moins un dérivé du lait, de sel émulsionnant survient en même temps que la cuisson, plus précisément à 90 °C pendant une période prédéfinie d'au moins 20 minutes.

6. Méthode selon la revendication 5, dans laquelle ladite crème de fromage comprend une quantité de fromage équivalant à un pourcentage compris entre 30 % et 70 % du total.

7. Méthode selon la revendication 1 ou 5 ou 6, dans laquelle ledit fromage est du Parmigiano Reggiano.

8. Méthode selon la revendication 1 ou 5 ou 7, dans laquelle le lait est du lait entier.

9. Méthode selon l'une quelconque des revendications précédentes, comprenant les étapes suivantes : fourniture de moût de raisin concentré ou de jus de raisin concentré à un pourcentage compris entre 20 % et 70 %, de vinaigre de vin à un pourcentage compris entre 3 % et 25 %, de vinaigre balsamique à un pourcentage compris entre 3 % et 25 %, de caramel à un pourcentage compris entre 1 % et 9 %, d'un premier épaississant à un pourcentage compris entre 0,1 % et 9 %, de la crème de fromage à un pourcentage compris entre 5 % et 50%.

10. Méthode selon l'une quelconque des revendications 1 à 8, comprenant les étapes suivantes : fourniture de moût de raisin blanc concentré ou de jus de raisin blanc concentré à un pourcentage compris entre 20 % et 70 %, de vinaigre blanc à un pourcentage compris entre 5 % et 40 %, d'un condiment à base de vinaigre blanc et de moût de raisin blanc concentré ou à base de vinaigre blanc et de jus de raisin blanc concentré, ledit condiment équivalant à un pourcentage compris entre 5 % et 40 %, d'un premier épaississant à un pourcentage compris entre 0,1 % et 9 %, de la crème de fromage à un pourcentage compris entre 5 % et 40 %.

11. Méthode selon l'une quelconque des revendications précédentes, dans laquelle ladite étape de mélange de ladite crème de vinaigre avec ladite crème de fromage est réalisée à l'aide d'un pétrin ou d'un malaxeur.

12. Méthode selon la revendication 11, dans laquelle ledit pétrin ou malaxeur est une coupeuse.

13. Méthode selon l'une quelconque des revendications 4 à 12, dans laquelle ladite étape d'ajout d'un épaississant est réalisée par le biais d'une machine d'agitation de poudre.
